# NEW EUROPEAN PATENT SPECIFICATION

(11) **EP 0 358 881 B2**
(45) Date of publication and mention of the opposition decision: **14.05.2003**
(45) Mention of the grant of the patent: 30.08.1995
(21) Application number: 89112899.3
(22) Date of filing: 14.07.1989
(51) Int. Cl.: B32B 3/10, B65D 65/40

(54) **Use of a plastic sheet**
Verwendung einer Kunstoffolie
Usage d' une feuille en plastique

(30) Priority: 31.08.1988 BE 8800991
(43) Date of publication of application: 21.03.1990
(73) Proprietor: I.P.B. N.V., B-8790 Waregem (BE)
(72) Inventor: Stofferis, E.P., B-9790 Wortegem-Petegem (BE)
(74) Representative: Leherte, Georges M.L.M., Dr.

(56) References cited:
- FR-A- 2 228 607
- FR-A- 2 384 901
- SU-A- 1 371 615
- Product brochure COROVIN 150
- Product brochure IPERTEC FORATO

## Description

The invention relates to the use of a known plastic sheet for, e.g. as a sheet allowing through the air humidity but being relatively watertight. Thanks to the said use, all kinds of packs can be produced.

The present invention is used for the production of packing boxes for all kinds of goods. The sheets which are traditionally used for these purposes are generally made of wood or cardboard, and for some goods even of metal. The material of such sheets depends, of course, on the material to be packed. For fruit and vegetables the packing boxes are generally of cardboard or wooden panels. These materials do, however, have a number of insuperable disadvantages, such as their combustibility, their limited service life, lack of hygiene, and limited mechanical properties such as strength, hardness and rigidity for cardboard.

There are, of course, already existing plastic sheets for the production of packs. These sheets are generally not solid. In order to save weight, these sheets are made up of two parallel films connected to each other by parallel partitions which run along one lengthwise direction, are at right angles to the films, and bound narrow lengthwise tubes. Such sheets have many advantages in their use in the packaging industry compared with the cardboard or wooden sheets. These sheets are very light; at a thickness of 2 mm the typical weight is 350 g/m²; and they have excellent mechanical properties such as strength, rigidity and toughness. They have excellent heat and sound insulation properties, are chemical-resistant, and can be sterilized. These sheets can be produced in various colours, and can be fully printed. The material of such sheets can be treated to make the sheets sun-resistant, self-extinguishing or permanently antistatic.

However, for certain applications these plastic sheets have the disadvantage that they are airtight and watertight. Vegetables which are packed in a southern country at a relatively high weather temperature and relatively high humidity in boxes made of such plastic sheets and then transported to a more northerly country will have lost much of their freshness on arrival, because the moisture from the air and the moisture coming out of the vegetables cannot escape from the pack, and when there is a drop in temperature condenses inside the pack, thus rapidly leading to rotting of the vegetables.

The object of the present invention is the use of a plastic sheet which alleviates this problem.

It is already known from document FR-A-2 228 607 a stratified panel exhibiting - inter alia - a plastic sheet (or "double-wall plate"), comprising a smooth wall and a perforated wall, the surfaces of said walls being parallel and mutually connected by a series of distance-pieces or partitions, which lie in a plane perpendicular to that of the walls. The walls and the distance-pieces define, within the plastic sheet, a series of parallel tubes, extending lengthwise. Although the plastic sheet is the component of a bigger stratified panel [= it could be regarded as a kind of intermediate product with respect to the final product of FR-A-2 228 607, which is the stratified panel], according to one preferred mode of manufacturing such a stratified panel, plastic sheets (or "double-wall plates") are prepared by extrusion, then cut to the wanted sizes, thereafter put on two parallel planes, at a distance defining the thickness of the panel core. Finally in the volume determined by the two plastic sheets, a measured amount of expansible plastic product is poured, whereafter a chemical reaction producing the expansion is caused to occur.
Prior to the pouring of the expansible plastic product, the individual plastic sheets could well be removed out of sequence. In view of the above and the fact that the process is controllable and the plates produced by extrusion are not of transient nature, it is evident that prior to the final step of chemically expanding the expansible product, plastic sheets not joined together, i.e. particularly without any expanded bonded parts, are indeed produced and that document FR-A-2 228 607 clearly describes such plastic sheets.

The present invention relates to the use of a plastic sheet of the kind mentioned above in accordance with independent claim 1.

Such a use is based on the technical effect which implies the sheet allowing through the air humidity but being relatively watertight. That technical effect, included in claim 1 as a functional technical feature, was neither previously made available to the public, nor was it obvious for a skilled person from the cited French document.

In a preferred embodiment of the use according to the invention all films are perforated.

In particular, all films are perforated at the level of the tubes.

The sheets considered in the use according to the invention have the advantage that they can be used for the production of a breathing pack. The moisture in a box made of such sheets can leave the box through the perforations, so that condensation is avoided. All advantages of the ordinary plastic sheets described above are, however, retained in full.

However, the use according to the invention give a number of additional, unexpected advantages. Due to the perforations applied, the outer surface of the sheets is far less smooth than the outer surface of unperforated sheets. Through this property, the potential applications of the invention are increased even further.

For example, the use according to the invention can consist in creating a spacer between different layers of bottles in a box or on a pallet. The perforated outer surface of the sheets forms an anti-slip layer for the bottles. Such a spacer does not deform or fall apart when a broken bottle loses its contents, and it can always be washed off and re-used, which is not the case with cardboard or wooden spacers. The use according to the invention can therefore bring to the production of boxes in which living creatures such as shellfish can be packed or transported. The perforations allow, for example, oysters to adhere to the walls of the box.

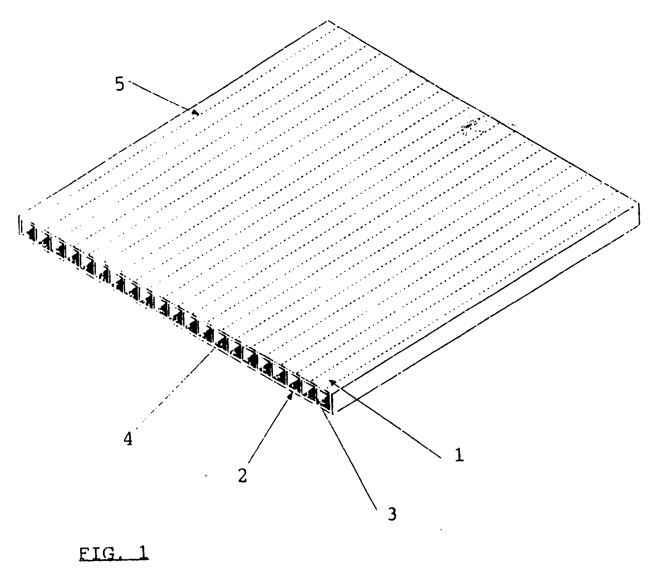

For a better understanding of this, a description of a possible embodiment of the invention is given with reference to the appended figure in which a sheet on which the use according to the invention is based is shown in perspective.

The sheet comprises two films (1, 2) which are parallel and form the outer surface of the sheet.

The films (1, 2) are connected to each other by parallel partitions (3) which run in one lengthwise direction of the sheet, and the outermost of which form the side surfaces of the sheet. The partitions (3) are disposed at right angles to the films (1, 2) and thus bound lengthwise tubes (4) lying between them. The films (1, 2) are also provided with perforations (5) which connect the environments situated on either side of the sheet to the tubes (4). In this way the humidity of one environment can escape through the perforations of one film (1), through the tubes (4), and through the perforations of the other film (2) to the other environment.

It goes without saying that the sheet can also be made up of more than two films (1, 2). The sheet can then have one or more perforated intermediate films between the outer films, and is then made up of two or more layers of tubes (4). It also goes without saying that, depending on the use of the sheets according to the invention, only part of the surface of the films can be perforated.

## Claims

1. Use for the production of a breathing pack of a plastic sheet comprising two or more parallel films (1,2) connected to each other by parallel partitions (3) which stand on the films, run along one lengthwise direction and bound lengthwise tubes (4) whereas one or more of the films (1,2) is (are) perforated over all or part of its (their) surface, the sheet allowing through the air humidity but being relatively watertight.

2. Use according to claim 1, **characterized in that** all films (1,2) are perforated.

3. Use according to claim 1, **characterized in that** all films (1,2) are perforated at the level of the tubes (4).

## Patentansprüche

1. Verwendung für die Herstellung einer atmenden Verpackung einer Kunststoffplatte aus zwei oder mehr parallelen Folien (1, 2), die miteinander durch parallele Fachwände (3) verbunden sind, welche auf den Folien aufstehen, in Längsrichtung verlaufen und längsgerichtete Rohre (4) begrenzen, wobei eine oder mehrere der Folien (1,2) über ihre gesamte Oberfläche oder einen Teil derselben perforiert ist bzw. sind wobei die Platte, die Luftfeuchtigkeit hindurchläßt, aber relativ wasserdicht ist.

2. Verwendung nach Anspruch 1, **dadurch gekennzeichnet, daß** alle Folien (1,2) perforiert sind.

3. Verwendung nach Anspruch 1, **dadurch gekennzeichnet, daß** alle Folien (1,2) auf der Höhe der Rohre (4) perforiert sind.

## Revendications

1. Utilisation pour la production d'un emballage perméable à l'air d'une feuille plastique, comprenant deux ou plusieurs pellicules parallèles (1, 2) attachées les unes aux autres par des cloisons parallèles (3) qui se tiennent debout sur les pellicules et s'étendent le long d'une direction longitudinale, et des tubes (4) limités longitudinalement, tandis qu'une ou plusieurs des pellicules (1,2) est (sont) perforée(s) sur toute ou une partie de sa (leur) surface, tandis que la feuille permet le passage de l'humidité de l'air mais est relativement étanche à l'eau.

2. Utilisation selon la revendication 1, **caractérisée en ce que** toutes les pellicules (1,2) sont perforées.

3. Utilisation selon la revendication 1, **caractérisée en ce que** toutes les pellicules (1,2) sont perforées au niveau des tubes (4).
